# EUROPÄISCHE PATENTANMELDUNG

(11) **EP 2 667 496 A2**
(43) Veröffentlichungstag der Anmeldung: **27.11.2013**
(21) Anmeldenummer: 13167215.6
(22) Anmeldetag: 10.05.2013
(51) Int. Cl.: H02K 19/10, H02K 7/14

(54) **Einen elektrischen Pumpenmotor aufweisendes Flurförderzeug**

(30) Priorität: 21.05.2012 DE 102012104341
(71) Anmelder: Linde Material Handling GmbH, 63743 Aschaffenburg (DE)
(72) Erfinder: Marner, Wilfried, 63741 Nilkheim (DE); Weiner, Christian, 63785 Obernburg (DE)
(74) Vertreter: Geirhos, Johann

(57) **Zusammenfassung**

Bei einem Flurförderzeug mit einer Arbeitshydraulik, die durch eine Hydraulikpumpe (33) mit Druckmittel versorgt wird, wobei die Hydraulikpumpe (33) von einem elektrischen Pumpenmotor (32) angetrieben wird, weist der elektrische Pumpenmotor (32) einen Stator (5) mit einer Ankerwicklung (8), die eine Teilung proportional der Anzahl von Paaren von Statorpolen (6) des Stators (5) hat, und Feldmagnetmittel zur Bildung eines magnetischen Flusses unter einer in Rotationsrichtung jeweils um einen Winkel gegenüber einem Magnetfeld der Ankerwicklung (8) abweichenden Richtung, insbesondere um 90° bei einem Stator (5) mit vier Statorpolen (6),
sowie einen Rotor (1) aus weichmagnetischem Material hoher Permeabilität mit Rotorpolen (4) mit in Orientierung der Rotorpole (4) geringer magnetischer Reluktanz auf.

## Beschreibung

Die Erfindung betrifft ein Flurförderzeug mit einer Arbeitshydraulik, die durch eine Hydraulikpumpe mit Druckmittel versorgt wird, wobei die Hydraulikpumpe von einem elektrischen Pumpenmotor angetrieben wird.

Es ist möglich, Reluktanzmaschinen mit sogenannter Flussumschaltung (flux switching) auszuführen, die zweiphasige geschaltete Reluktanzmaschinen sind und einen Zweiquadrantenbetrieb als Motor oder Generator in einer Drehrichtung ermöglichen.

Die Statorwicklungen einer solchen Flussumschaltung-Reluktanzmaschine weisen eine Teilung (Pitch) auf. Diese Teilung ist in ihrem Winkel doppelt so groß wie die Teilung von zugehörigen Statorpolen. Im Fall einer Flussumschaltung-Reluktanzmaschinen mit einer Teilung der Statorpole von 90°, entsprechend vier über 360° verteilten Statorpolen, umspannt demnach eine Statorwicklung jeweils zwei Statorpole entsprechend einer Teilung der Statorwicklung von 180°. Bei einer größeren Anzahl von Statorpolen entspricht die Teilung einem der Statorpolpaarzahl proportionalen Vielfachen, etwa bei einer Flussumschaltung-Reluktanzmaschine mit acht Statorpolen einer Teilung von 90° entsprechend dem doppelten der Statorpolteilung von 45°. Die zwei Statorwicklungen der zweiphasigen Flussumschaltung-Reluktanzmaschinen sind dabei zueinander um einen symmetrischen Winkel gleichmäßig versetzt, d.h. bei einer Flussumschaltung-Reluktanzmaschine mit vier Statorpolen um 90°, so dass jeweils eine Statorwicklung gegenüberliegende Schlitze des Stators zwischen den Statorpolen ausfüllt. Bei einer Flussumschaltung-Reluktanzmaschinen mit acht Statorpolen beträgt der Winkel der Versetzung der zwei Statorwicklungen 45°.

Dabei ist eine der beiden Statorwicklungen als Feldwicklung ausgebildet, die sich dadurch auszeichnet, dass ein konstanter Strom durch diese fließt und sie ein permanentes magnetisches Feld erzeugt. Die zweite Statorwicklung ist als Ankerwicklung ausgebildet, die gegenüber der Feldwicklung um einen Statorpol versetzt ist. Die Ankerwicklung wird so mit Strom geschaltet, dass diese ein wechselndes magnetisches Feld erzeugt. Im Falle einer Teilung mit vier Statorpolen ist das magnetische Feld der Ankerwicklung somit quer zu dem magnetischen Feld der Feldwicklung angeordnet. Allgemein ist das in Richtung auf den Rotor erzeugte magnetische Feld der Ankerwicklung gegenüber dem entsprechenden magnetischen Feld der Feldwicklung unter einem Winkel angeordnet, der demjenigen zwischen zwei Polen des Stators entspricht, somit im Falle von acht Statorpolen einem Winkel von 45°. Die Ankerwicklung kann mit alternierender Polung mit Strom beschaltet werden und es bildet sich ein magnetisches Drehfeld.

Im Gegensatz zu Asynchronmaschinen oder durch Permanentmagnete erregten Synchronmaschinen, bei denen das Drehmoment durch die Wechselwirkung eines Magnetfelds mit einem durch einen Leiter fließenden Strom bzw. die Wechselwirkung mit den Permanentmagneten erzeugt wird, erfolgt die Drehmomenterzeugung in einer Reluktanzmaschine aufgrund der auf einen weichmagnetischen Stoff eines Rotors in einem Magnetfeld wirkenden Maxwellschen Kraft, durch die das magnetische System den Zustand des geringsten magnetischen Widerstands oder Reluktanz anstrebt. Durch eine spezielle Formgebung des Läufers oder Rotors mit ausgeprägten Rotorpolen wird diesem eine starke bevorzugte Ausrichtung zum magnetischen Feld eingeprägt und der Rotor sucht dem magnetischen Drehfeld zu folgen. Dabei weist der Rotor bei einer Flussumschaltung-Reluktanzmaschine üblicherweise die halbe Anzahl von Rotorpolen gegenüber der Anzahl Statorpole auf und wird mit jedem Schaltvorgang der Ankerwicklung auf die um den Winkel der Teilung der Statorpole versetzte Gruppe der Statorpole ausgerichtet. Durch eine spezielle Formgebung der ausgeprägten Rotorpole des Rotors wird das Anlaufen aus dem Stillstand erreicht und die Drehrichtung eingeprägt. Dabei weisen im Regelfall die Rotorpole eine Asymmetrie auf, indem der Rotorpol im Querschnitt betrachtet nicht achsensymmetrisch aufgebaut ist.

Bekannt sind weiterhin synchrone Reluktanzmaschinen und geschaltete Reluktanzmaschinen, bei denen entweder durch mindestens drei Statorspulen ein Drehfeld erzeugt wird, wie bei einer Drehstromsynchronmaschine, oder durch eine Mehrzahl von Statorwicklungen, die aufeinanderfolgend einzelnen geschaltet werden, ein Drehfeld erzeugt wird. Nachteilig an der synchronen, wie auch der geschalteten Reluktanzmaschine ist die relativ aufwändige elektronische Ansteuerung, die eine Mehrzahl von elektronischen Leistungsschaltern mit entsprechender Regelelektronik benötigt.

Bei batterie-elektrisch betriebenen Flurförderzeugen werden als elektrischer Pumpenmotor der Arbeitshydraulik einfach aufgebaute Gleichstrommaschinen eingesetzt, wenn besonders niedrige Kosten angestrebt werden.

Nachteilig an diesem Stand der Technik ist jedoch, dass Gleichstrommaschinen einen geringeren Wirkungsgrad als vergleichbare Wechselstrom-Maschinen haben. Darüber hinaus sind sie, aufgrund der hohen Anzahl an Einzelkomponenten, im Aufbau wesentlich komplexer als z.B. Asynchronmaschinen. Außerdem muss der Strom dem Anker über Schleifkontakte an dem Kommutator zugeführt werden. Diese Schleifkontakte sind als Bürsten oder Kohlebürsten ausgeführt und verschleißbehaftet, wodurch ein Wartungsaufwand entsteht.

Anstatt Gleichstrommaschinen werden als elektrischer Pumpenmotor der Arbeitshydraulik dreiphasige Asynchronmaschinen genutzt, oder bei noch größeren Leistungsanforderungen auch dreiphasige Permanentmagnetsynchronmotoren, wenn höhere Anforderungen als an Gleichstrommaschinen bestehen. Im Gegensatz zu den Gleichstrommaschinen sind Dreiphasensynchronmotoren oder Dreiphasenasynchronmotoren im Aufbau einfacher und wartungsfrei, wegen des entfallenen Kommutators, und zeichnen sie sich durch einen höheren Wirkungsgrad aus. Insbesondere bei Arbeitshydrauliken mit Dreiphasensynchronmotoren oder Dreiphasenasynchronmotoren als elektrischer Pumpenmotor ist zumeist in die Arbeitshydraulik eine Lenkhydraulik integriert.

Nachteilig ist jedoch, dass die Ansteuerung, im Gegensatz zur Gleichstrommaschine, wegen des benötigten, gesteuerten dreiphasigen Drehfeldes wesentlich komplexer ist, denn es wird eine umfangreiche Leistungselektronik für die Schaltung aller drei Phasen mit insgesamt sechs elektronischen Leistungsschaltern benötigt sowie im Regelfall eine Erfassung der Lage oder Drehgeschwindigkeit. Bei der zumeist eingesetzten Pulsweitenmodulation ist vor allem die Ansteuerung der plusseitigen Schalter aufwendig, aufgrund des wechselnden Bezugspotentials.

Der vorliegenden Erfindung liegt die Aufgabe zugrunde, ein Flurförderzeug mit einer Arbeitshydraulik, die durch eine mittels eines elektrischen Pumpenmotor angetrieben

Hydraulikpumpe mit Druckmittel versorgt wird, zur Verfügung zu stellen, das kostengünstig herzustellen ist und zuverlässig und robust arbeitet, um rauen Betriebsbedingungen gewachsen zu sein.

Diese Aufgabe wird durch ein Flurförderzeug mit den Merkmalen des Patentanspruchs 1 gelöst. Vorteilhafte Weiterbildungen der Erfindung werden in den Unteransprüchen angegeben.

Die Aufgabe wird durch ein Flurförderzeug mit einer Arbeitshydraulik gelöst, die durch eine Hydraulikpumpe mit Druckmittel versorgt wird, wobei die Hydraulikpumpe von einem elektrischen Pumpenmotor angetrieben wird und der elektrische Pumpenmotor einen Stator mit einer Ankerwicklung, die eine Teilung proportional der Anzahl von Paaren von Statorpolen des Stators hat, und Feldmagnetmittel zur Bildung eines magnetischen Flusses unter einer in Rotationsrichtung jeweils um einen Winkel gegenüber einem Magnetfeld der Ankerwicklung abweichenden Richtung, insbesondere um 90° bei einem Stator mit vier Statorpolen, sowie einen Rotor aus weichmagnetischem Material hoher Permeabilität mit Rotorpolen mit in Orientierung der Rotorpole geringer magnetischer Reluktanz aufweist.

Durch eine geeignete Leistungselektronik wird die Ankerwicklung des Stators mit Strom beschaltet. Dabei ist vorteilhaft nur eine sehr einfache Leistungselektronik erforderlich, da keine sinusförmigen Ströme erforderlich sind, wie etwa bei einer Drehstrommaschine, und nur eine Phase geschaltet werden muss. Vorteilhaft ergibt sich dadurch ein Flurförderzeug, das mit einem solchen als Flussumschaltung-Reluktanzmaschine wirkenden Elektromotor als elektrischem Pumpenmotor ausgestattet ist, eine kostengünstige und sehr robuste Druckmittelversorgung für die Arbeitshydraulik, die mit großer Zuverlässigkeit und geringer Ausfallwahrscheinlichkeit arbeitet. Es ergibt sich ein geringer Materialeinsatz, da keine Magneten oder Kupfer- bzw. Aluminiumleiter auf dem Rotor benötigt werden, verbunden mit entsprechenden Kosteneinsparungen, wenn diese teureren Materialen nicht erforderlich sind. Bei einer Ausführung des Stators als Blechpaket und/oder des Rotors als Blechpaket kann auch die Leistungsfähigkeit gut an den Bedarf angepasst werden über das Ändern der Länge des Blechpakets. Wegen des geringen Einflusses der magnetischen Sättigung im Überlastbereich kann der Pumpenmotor auch überlastet werden. Eine einfache Kühlung ist möglich, da Verlustleistung überwiegend auf dem Stator in dessen Wicklungen entsteht. Ebenso ist eine Kühlung der Lagerung des Rotors einfacher zu bewerkstelligen und es erfolgt von vorneherein aus dem Rotor selbst nur eine geringere Erwärmung der Lagerung. Obwohl vorteilhafter Weise eine Rückspeisung von Energie durch Generatorbetrieb grundsätzlich möglich ist, erfolgt eine solche jedoch nicht im Fehlerfall. Vorteilhaft kommt es schließlich zu keiner Bewegung des Pumpenmotors im Kurzschlussfall und somit zu unerwünschten Reaktionen der Arbeitshydraulik, wodurch eine hohe Betriebssicherheit des Flurförderzeugs erzielt wird und geringe Anforderungen an eine Not-Ausfunktion bestehen. Der Pumpenmotor weist auch vorteilhaft einen guten Wirkungsgrad durch Wegfall der ohmschen Verluste im Rotor auf und ist wartungsfrei, da bürstenlos. Durch den einfachen Aufbau ergibt sich auch eine große Montagefreundlichkeit bzw. gute Automatisierbarkeit der Fertigung

Der Stator kann vier radial nach innen gerichtete Statorpole und der Rotor zwei radial nach außen gerichtete Rotorpole aufweisen.

Der Stator kann acht radial nach innen gerichtete Statorpole und der Rotor vier radial nach außen gerichtete Rotorpole aufweisen.

In einer Ausführungsform des erfindungsgemäßen Flurförderzeugs bestehen die Feldmagnetmittel aus einer Feldwicklung mit einer Teilung proportional der Anzahl von Statorpolpaaren, wobei die Feldwicklung um den Winkelversatz zwischen zwei Statorpolen gegenüber der Ankerwicklung versetzt angeordnet ist.

Dadurch sind keine Permanentmagnete erforderlich, deren Preise aufgrund eingesetzter seltener Materialien stark schwanken und sehr hoch sein können. Es erweist sich auch als vorteilhaft, dass der Pumpenmotor gegenüber thermischen Belastungen sich dadurch nicht kritisch verhält, da Permanentmagnetmaterial aufgrund von zu starker Erwärmung seine Magnetisierung verlieren könnte.

In einer günstigen Ausführungsform der Erfindung wird die Ankerwicklung durch eine Leistungselektronik angesteuert, bei der die Ankerwicklung in einer H-Brücke mit vier elektronischen Schaltern geschaltet ist.

Es ist eine einfache, blockkommutierte Stromregelung wie auch eine sensorlose Regelung möglich.

In einer vorteilhaften Weiterbildung der Erfindung wird die Ankerwicklung durch eine Leistungselektronik angesteuert, bei der die Ankerwicklung zwei Wicklungen oder eine Bifiliarwicklung aufweist, deren beide Zweige jeweils gegenpolig durch je einen elektronischen Schalter geschaltet sind.

Dadurch wird ein kostengünstiger und einfacher Aufbau der Leistungselektronik möglich mit zwei Schaltern, beispielsweise mit zwei minusseitigen Schaltern. Eine Bifiliarwicklung mit zwei verdrillten Drähten erfordert bei der Herstellung nur einen geringen Mehraufwand

Die Ankerwicklung und die Feldwicklung können parallel geschaltet sein.

Die Ankerwicklung und die Feldwicklung können in Reihe geschaltet sein.

Mindestens einer der Rotorpole, bevorzugt alle Rotorpole, können eine Asymmetrie aufweisen, insbesondere indem der jeweilige Rotorpol im Querschnitt betrachtet nicht achsensymmetrisch ist.

Die Feldmagnetmittel können Permanentmagnete aufweisen.

Um Verluste in der Feldwicklung zu minimieren, können Permanentmagnete eingesetzt werden oder Kombinationen aus Feldwicklung und Permanentmagneten.

Die Arbeitshydraulik kann eine Hubvorrichtung für Lasten, insbesondere ein Hubgerüst mit höhenbeweglich geführtem Lastaufnahmemittel, und/oder eine hydraulische Lenkung umfassen.

Die Hydraulikpumpe und der elektrische Pumpenmotor können in ein Kompaktaggregat integriert werden, das die Druckversorgung für die Arbeitshydraulik, insbesondere für eine Hubvorrichtung und/oder eine hydraulische Lenkung übernimmt. Eine elektronische Steuereinheit und/oder eine Leistungselektronik können ebenfalls in das Kompaktaggregat integriert werden. Daneben können alternativ, aber auch zusätzlich, in das Kompaktaggregat hydraulische Ventile integriert werden. Bei einem erfindungsgemäßen Flurförderzeug kann eine elektrohydraulische Lenkung vorgesehen werden.

Weitere Vorteile und Einzelheiten der Erfindung werden anhand des in den schematischen Figuren dargestellten Ausführungsbeispiels näher erläutert. Hierbei zeigen
- Fig. 1a: schematisch ein Ausführungsbeispiel eines Pumpenmotors im Querschnitt, der bei dem erfindungsgemäßen Flurförderzeug zum Einsatz kommen,
- Fig. 1b: schematisch den Pumpenmotor der Fig. 1a in einer zweiten Drehwinkellage,
- Fig. 2: schematisch den Stromverlauf von Ankerwicklung und Feldwicklung des Pumpenmotors,
- Fig. 3: schematisch ein Schaltbild einer Ansteuerung des Pumpenmotors,
- Fig. 4: schematisch ein Schaltbild einer alternativen zweiten Ansteuerung des Pumpenmotors,
- Fig. 5: ein Ausführungsbeispiel eines erfindungsgemäßen Flurförderzeugs und
- Fig. 6: schematisch eine elektrische Pumpeneinheit des erfindungsgemäßen Flurförderzeugs der Fig. 5.

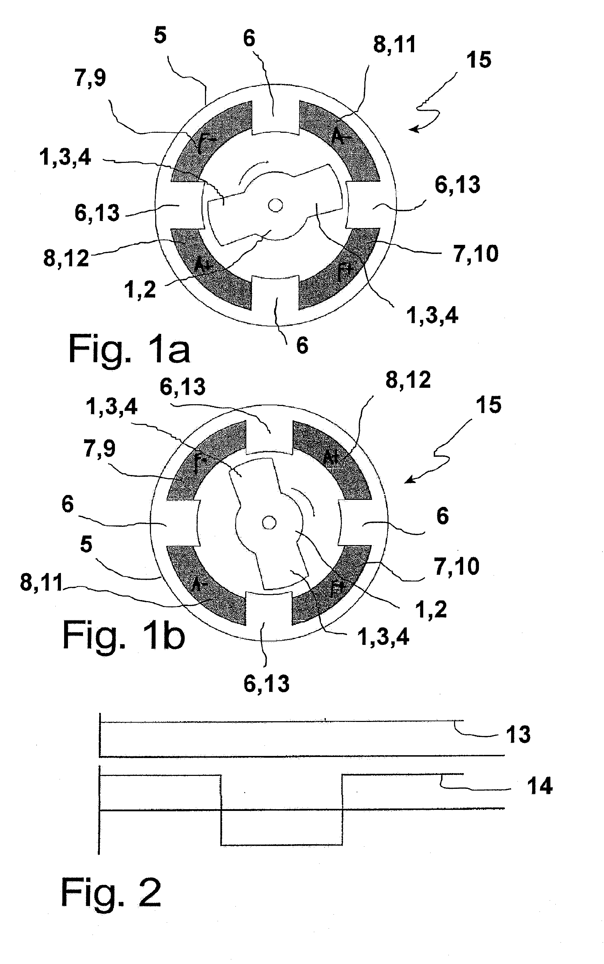

Die Fig. 1 a zeigt schematisch ein Ausführungsbeispiel eines Pumpenmotors 15 einer Arbeitshydraulik, der bei einem erfindungsgemäßen Flurförderzeug zum Einsatz kommt. Der Rotor 1 besteht aus einer Rotorwelle 2 sowie zwei Segmenten 3 aus weichmagnetischem oder einem geeigneten hochpermeablen Material, die in Umfangsrichtung Rotorpole 4 bilden, die beim Anliegen eines äußeren Magnetfelds sich mit dem Magnetfeld auszurichten suchen, da in der Orientierung der Rotorpole 4 die kleinste magnetische Reluktanz vorliegt. Ein Stator 5 weist insgesamt vier gleichmäßig verteilte Statorpole 6 auf, die somit eine Teilung von 90° haben. Eine Feldwicklung 7 umfasst mit einer Teilung von 180° jeweils ein Statorpolpaar 6. Um 90° hierzu versetzt ist eine Ankerwicklung 8 ebenfalls mit einer Teilung von 180° angeordnet, so dass diese ebenfalls jeweils ein Paar von Statorpolen 6 umfasst. In der Darstellung der Fig. 1 a ist eine minusseitig geschaltete Seite 9 und eine plusseitig geschaltete Seite 10 der Feldwicklung 7 dargestellt. Ebenso ist eine minusseitig geschaltete Seite 11 und eine plusseitig geschaltete Seite 12 der Ankerwicklung 8 dargestellt. In diesem Schaltzustand bilden die von gegenpolig geschalteten Teilen der Ankerwicklung 8 und Feldwicklung 7 umschlossenen Statorpole 6 magnetische Pole 13, nach denen sich der Rotor 1 ausrichtet.

Die Fig. 1 b zeigt schematisch den Pumpenmotor 15 der Fig. 1a in einer zweiten Drehwinkellage. Der Rotor 1 mit Rotorwelle 2 sowie den Segmenten 3 bzw. Rotorpolen 4 ist innerhalb des Stators 5 mit den Statorpolen 6 um 90° verdreht ausgerichtet, da die Ankerwicklung 8 nun umgekehrt bestromt ist. Die minusseitig geschaltete Seite 9 und die plusseitig geschaltete Seite 10 der Feldwicklung 7 sind gegenüber der Fig. 1a gleich, jedoch sind nun die minusseitig geschaltete Seite 11 und die plusseitig geschaltete Seite 12 der Ankerwicklung 8 vertauscht. In diesem Schaltzustand bilden gegenüber der Darstellung der Fig. 1 a die anderen beiden Statorpole 6 magnetische Pole 13, nach denen sich der Rotor 1 ausrichtet.

Die Fig. 2 zeigt schematisch über der Rotorposition den Stromverlauf 13 der Feldwicklung 7, der über den Drehwinkel des Rotors 1 konstant ist, und den Stromverlauf 14 der Ankerwicklung 8, der als Rechteck mit alternierender Polung geschaltet ist.

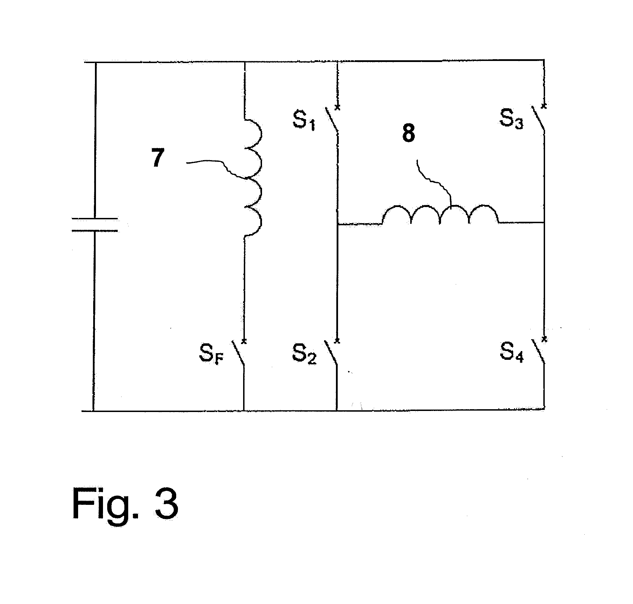

In der Fig. 3 ist schematisch ein Schaltbild einer Ansteuerung des Pumpenmotors 15 dargestellt. Die Ankerwicklung 8 ist über vier elektrische Leistungsschalter S1, S2, S3 und S4 geschaltet in einer H-Brücke angeordnet. Durch das Schalten der zwei Leistungsschalter S1 und S4 kann die Ankerwicklung 8 mit einer Polung mit Strom beschaltet werden. Durch die Leistungsschalter S3 und S2 kann dies mit gegensätzlicher Polung erfolgen. Parallel zu der Ankerwicklung 8 ist die Feldwicklung 7 angeordnet, die über einen Schalter SF geschaltet werden kann, der jedoch auch entfallen kann.

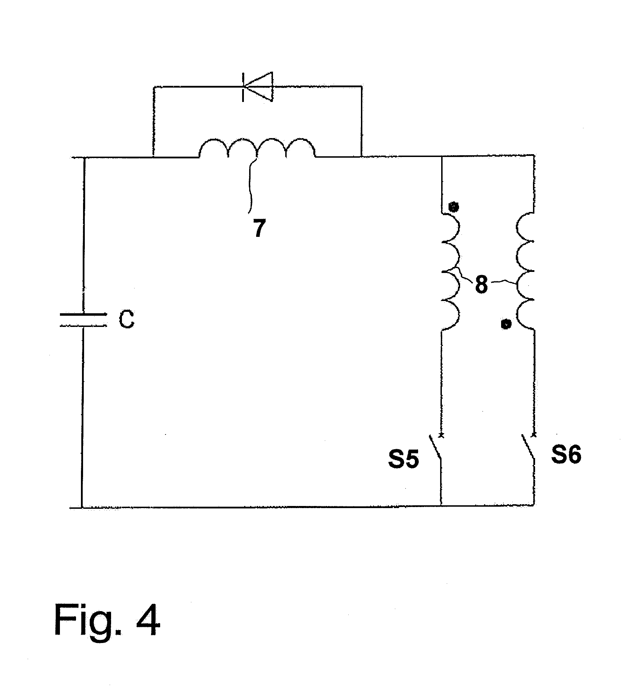

Die Fig. 4 zeigt schematisch ein Schaltbild einer alternativen zweiten Ansteuerung des Pumpenmotors 15. Die Ankerwicklung 8 ist als Bifiliarwicklung ausgebildet, die aus zwei miteinander verdrillten Drähten besteht. Dadurch ist es möglich, allein mit nur zwei Schaltern S5 und S6 die Ankerwicklung 8 mit Strom gegensätzlicher Polung zu beschalten. Die Feldwicklung 7 ist bei dieser alternativen Ausführungsform mit der Ankerwicklung 8 in Reihe geschaltet.

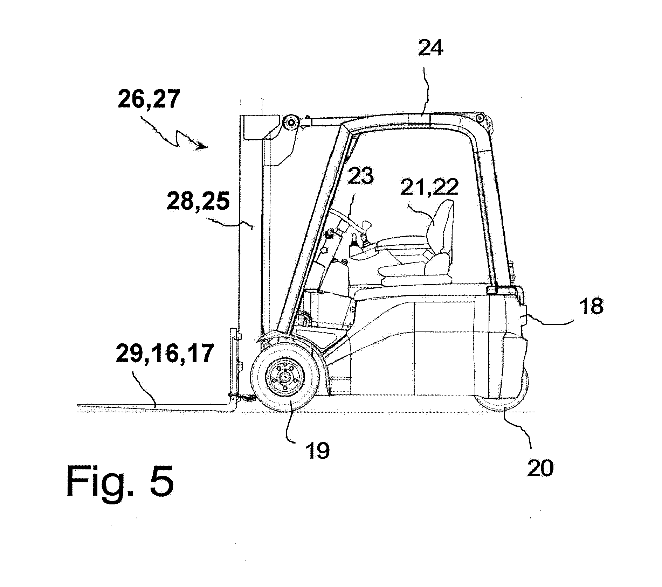

Die Fig. 5 zeigt ein Ausführungsbeispiel eines erfindungsgemäßen Flurförderzeugs 26 in Seitenansicht. Das dargestellte Flurförderzeug 26 ist beispielsweise als elektrisch über eine nicht dargestellte Traktionsbatterie betriebener Gegengewichtsgabelstapler 27 ausgebildet.

Der Gegengewichtsgabelstapler 27 weist frontseitig eine als Hubgerüst 25 ausgebildete vordere Hubvorrichtung 28 mit einem an dieser höhenbeweglich geführten Lastaufnahmemittel 29 auf, beispielsweise einer aus zwei Gabelzinken 16 bestehenden Lastgabei 17. Ein auf dem Lastaufnahmemittel 29 aufliegendes Lastgewicht wird durch ein heckseitiges hinteres Gegengewicht 18 ausgeglichen. Dabei erfolgt eine Hubbewegung des Hubgerüstes 25 durch einen in der Fig. 5 nicht dargestellten Hydraulikzylinder als Hubantrieb, der Teil einer Arbeitshydraulik ist und durch eine Hydraulikpumpe mit Druckmittel versorgt wird. Alternativ ist es auch möglich, dass die Hubbewegung durch mehrere Hydraulikzylinder oder Teleskopzylinder erfolgt. Weitere Verbraucher der Arbeitshydraulik können von einem einen oder mehrere Neigezylinder umfassenden Neigeantrieb des Hubgerüstes 25 und einem oder mehrerer gegebenenfalls vorhandenen Zusatzantrieben gebildet werden, beispielsweise einer Seitenschiebereinrichtung des Lastaufnahmemittels 29.

Der in dem vorliegenden Beispiel beispielsweise batterie-elektrisch angetriebene Gegengewichtsgabelstapler 27 weist eine Vorderachse mit zwei Vorderrädern 19 auf, die bevorzugt als Antriebsräder ausgebildet sind. Zum Antrieb der beiden Antriebsräder kann ein Einzelradantrieb mit einem elektrischen Antriebsmotor für jedes Antriebsrad oder ein beide Räder über ein Differentialgetriebe antreibender einzelner elektrischer Antriebsmotor vorgesehen werden. Das im dargestellten Ausführungsbeispiel als Dreiradstapler ausgebildete Flurförderzeug 26 wird über ein einzelnes gelenktes Rad 20 im Fahrzeugheck gesteuert. Dabei kann der Radeinschlag durch einen in der Fig. 5 nicht dargestellten Hydraulikzylinder bewirkt werden, der als Lenkhydraulik Teil der Arbeitshydraulik ist. In der hier als Beispiel gezeigten Alternative, in der die Vorderrädern 19 als angetriebene Räder ausgebildet sind, ist das gelenkte Rad 20 als nicht angetriebenes Rad ausgeführt. Der Gegengewichtsgabelstapler 27 kann alternativ mit einem verbrennungsmotorischen Antriebssystem versehen sein und/oder als Vierradstapler, bei dem zur Lenkung eine heckseitige Lenkachse mit zwei gelenkten Rädern vorgesehen ist.

Ein Fahrerplatz 21 des Flurförderzeugs 26 ist mit einem Fahrersitz 22 versehen. Der Fahrersitz 22 und weitere Bedienelemente, beispielsweise ein Lenkrad 23, befinden sich unter einem Fahrerschutzdach 24.

Unterhalb des Fahrersitzes 22 befindet sich bei dem batterie-elektrisch angetriebenen Gegengewichtsgabelstapler 27 eine Traktionsbatterie und wäre bei einem verbrennungsmotorisch angetriebenen Gegengewichtsgabelstapler ein Verbrennungsmotor angeordnet.

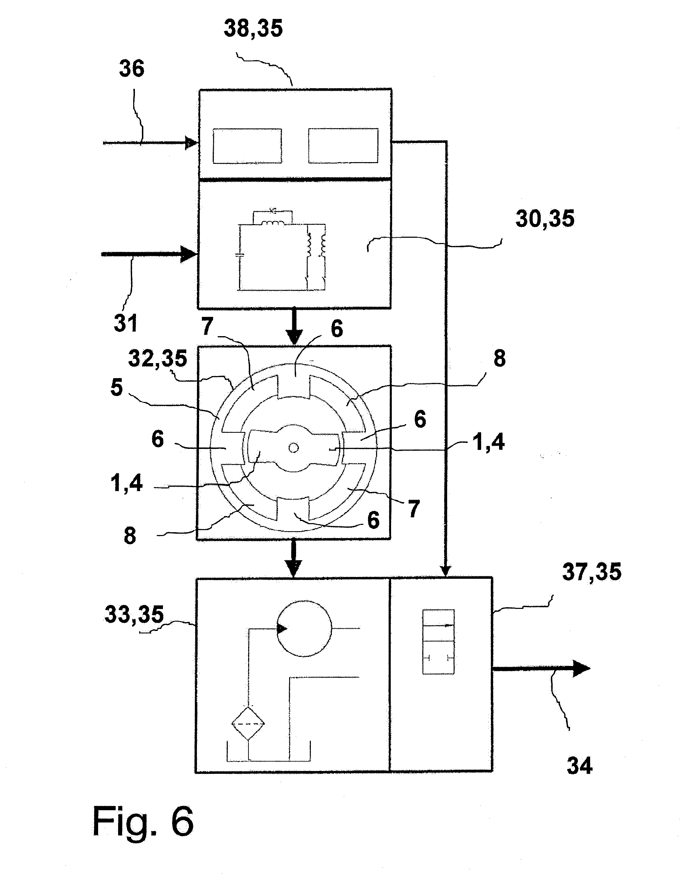

Die Fig. 6 zeigt schematisch eine Pumpeneinheit der Arbeitshydraulik des erfindungsgemäßen Flurförderzeugs 26 der Fig. 5 mit einem erfindungsgemäßen elektrischen Pumpenmotor 32, 15 der Figuren 1 a, 1 b.

Eine Steuersignalleitung 36 leitet Steuerbefehle für eine Hydraulikpumpe 33 und eine Hydraulikventilanordnung 37, mit der die Verbraucher der Arbeitshydraulik gesteuert werden können, an eine Steuerelektronik 38, die die Hydraulikventilanordnung 37 sowie eine Leistungselektronik 30 gemäß der Figur 3 bzw. 4, die von einer Stromversorgung 31 mit Strom versorgt wird, ansteuert. Die Leistungselektronik 30 steuert die Ankerwicklung 8 des elektrischen Pumpenmotors 32 mit dem Rotor 1 an und erzeugt ein Drehfeld, in dem sich der Rotor 1 mit seinen Polen 5 auszurichten sucht und daher mitgedreht wird. Mit dem Rotor 1 des elektrischen Pumpenmotors 32 ist eine Hydraulikpumpe 33 verbunden, die über die Hydraulikventilanordnung 37 Druckmittel in eine Förderleitung 34 fördert.

Die Steuerelektronik 38, die Leistungselektronik 30, der elektrische Pumpenmotor 32, die Hydraulikpumpe 33 und die Hydraulikventilanordnung 37 können in verteilten Baugruppen in unterschiedlichen Zusammenstellungen angeordnet werden. Mit besonderem Vorteil bilden die Steuerelektronik 38, die Leistungselektronik 30, der elektrische Pumpenmotor 32, die Hydraulikpumpe 33 und die Hydraulikventilanordnung 37 ein Kompaktaggregat 35.

Die Erfindung ist nicht beschränkt auf Gegengewichtsgabelstapler. Vielmehr kann jegliche Art von Flurförderzeugen mit einem elektrischen Pumpenmotor gemäß der Erfindung ausgestattet werden. Es können etwa auch Lagertechnikgeräte mit elektrischem Antrieb mit einem solchen elektrischen Pumpenmotor versehen werden, wie beispielsweise Hubwagen, Kommissionierer, Schlepper, Plattformwagen, Schubstapier, Schubmaststapler und Regalstapler.

## Patentansprüche

1. Flurförderzeug mit einer Arbeitshydraulik, die durch eine Hydraulikpumpe (33) mit Druckmittel versorgt wird, wobei die Hydraulikpumpe (33) von einem elektrischen Pumpenmotor (32) angetrieben wird,
**dadurch gekennzeichnet,**
**dass** der elektrische Pumpenmotor (32) einen Stator (5) mit einer Ankerwicklung (8), die eine Teilung proportional der Anzahl von Paaren von Statorpolen (6) des Stators (5) hat, und Feldmagnetmittel zur Bildung eines magnetischen Flusses unter einer in Rotationsrichtung jeweils um einen Winkel gegenüber einem Magnetfeld der Ankerwicklung (8) abweichenden Richtung, insbesondere um 90° bei einem Stator (5) mit vier Statorpolen (6),
sowie einen Rotor (1) aus weichmagnetischem Material hoher Permeabilität mit Rotorpolen (4) mit in Orientierung der Rotorpole (4) geringer magnetischer Reluktanz aufweist.

2. Flurförderzeug nach Anspruch 1,
**dadurch gekennzeichnet,**
**dass** der Stator (5) vier radial nach innen gerichtete Statorpole (6) und der Rotor (1) zwei radial nach außen gerichtete Rotorpole (4) aufweist.

3. Flurförderzeug nach Anspruch 1,
**dadurch gekennzeichnet,**
**dass** der Stator acht radial nach innen gerichtete Statorpole und der Rotor vier radial nach außen gerichtete Rotorpole aufweist.

4. Flurförderzeug nach einem der Ansprüche 1 bis 3,
**dadurch gekennzeichnet,**
**dass** die Feldmagnetmittel aus einer Feldwicklung (7) mit einer Teilung proportional der Anzahl von Statorpolpaaren besteht, wobei die Feldwicklung (7) um den Winkelversatz zwischen zwei Statorpolen (6) gegenüber der Ankerwicklung (8) versetzt angeordnet ist.

5. Flurförderzeug nach Anspruch 4,
**dadurch gekennzeichnet,**
**dass** die Ankerwicklung (8) durch eine Leistungselektronik (30) angesteuert wird, bei der die Ankerwicklung (8) in einer H-Brücke mit vier elektronischen Schaltern (S1,S2,S3,S4) geschaltet ist.

6. Flurförderzeug nach Anspruch 4,
**dadurch gekennzeichnet,**
**dass** die Ankerwicklung (8) durch eine Leistungselektronik (30) angesteuert wird, bei der die Ankerwicklung (8) zwei Wicklungen oder eine Bifiliarwicklung aufweist, deren beide Zweige jeweils gegenpolig durch je einen elektronischen Schalter (S5,S6) geschaltet sind.

7. Flurförderzeug nach Anspruch 5 oder 6,
**dadurch gekennzeichnet,**
**dass** die Ankerwicklung (8) und die Feldwicklung (7) parallel geschaltet sind.

8. Flurförderzeug nach Anspruch 5 oder 6,
**dadurch gekennzeichnet,**
**dass** die Ankerwicklung (8) und die Feldwicklung (7) in Reihe geschaltet sind.

9. Flurförderzeug nach einem der Ansprüche 1 bis 8,
**dadurch gekennzeichnet,**
**dass** mindestens einer der Rotorpole (4), bevorzugt alle Rotorpole (4), eine Asymmetrie aufweisen, insbesondere indem der jeweilige Rotorpol (4) im Querschnitt betrachtet nicht achsensymmetrisch ist.

10. Flurförderzeug nach einem der Ansprüche 1 bis 9,
**dadurch gekennzeichnet,**
**dass** die Feldmagnetmittel Permanentmagnete aufweist.

11. Flurförderzeug nach einem der Ansprüche 1 bis 10,
**dadurch gekennzeichnet,**
**dass** die Arbeitshydraulik eine Hubvorrichtung (28) für Lasten, insbesondere ein Hubgerüst (25) mit höhenbeweglich geführtem Lastaufnahmemittel (29), und/oder eine hydraulische Lenkung umfasst.
